# FASCICULE DE BREVET EUROPEEN

(11) **EP 1 569 058 B1**
(45) Date de publication et mention de la délivrance du brevet: **25.07.2007**
(21) Numéro de dépôt: 05100782.1
(22) Date de dépôt: 04.02.2005
(51) Int. Cl.: G05B 19/401, B64C 1/12, B25B 11/00, G05B 19/408

(54) **Procédé et dispositif d'usinage par fenêtrage de panneaux minces non-développables**
Verfahren und Vorrichtung zur Befensterung von nicht entfaltbaren dünnen Platten
Windowing machining method and system for non-developable thin panels

(30) Priorité: 10.02.2004 FR 0401276
(43) Date de publication de la demande: 31.08.2005
(73) Titulaire: AIRBUS France, 31060 Toulouse (FR)
(72) Inventeur: Hamann, Jean-Christophe, La Baule 44500 (FR)
(74) Mandataire: Schmit, Christian Norbert Marie

(56) Documents cités:
- EP-A- 0 507 033
- EP-A- 1 245 317
- EP-A- 1 514 638
- US-A- 5 364 083
- US-A- 5 457 868
- US-A- 6 121 781
- US-B1- 6 314 630

## Description

La présente invention a trait à l'usinage par enlèvement de matière de pièces fines et flexibles notamment de forme complexe, telles que des panneaux de formes non-développables tels que, par exemple, les panneaux de revêtement de fuselage d'aéronefs.

L'invention vise un procédé d'usinage applicable en particulier à des panneaux de types métalliques, comportant ou non des raidisseurs, ou composites, ou de type « sandwich », dans lesquels doivent être pratiqués des usinages dans l'épaisseur tels que surfaçage ou réalisation de poches ou d'alvéoles, ou des opérations de détourage ou de perçage.

Les panneaux plus particulièrement visés par l'invention sont des panneaux de revêtement dits à double courbure, principalement situés en pointe avant des aéronefs. Ces panneaux, généralement en alliage léger, présentent des épaisseurs comprises dans une gamme allant de 1 à 12 mm selon les aéronefs et les matériaux constitutifs du panneau (alliage d'aluminium, alliage de titane, composite métallique ou à base de résine organique).

La réalisation de ces panneaux nécessite, lorsque le matériau le permet, une mise en forme par étirage sur une forme nécessairement convexe, cependant que les panneaux en matériaux composites sont mis en forme par des techniques de drapage-collage-infusion et compactage.

Le formage par étirage, de par sa productivité et sa flexibilité, reste majoritairement utilisé.

Ce type de formage est réalisé par la combinaison d'une traction sur le panneau et d'un « enveloppement » de ladite forme convexe, si bien que la forme géométriquement connue du panneau (celle qui a été en contact avec la forme d'étirage) est la face interne (concave). Le procédé d'étirage engendre une déformation plastique de la totalité de l'épaisseur du panneau, et produit par suite, par striction, un amincissement de la section. Cette « perte d'épaisseur », de par la nature non-développable de la forme, n'est pas uniforme sur toute la surface du panneau.

L'usinage de tels panneaux pose des problèmes de mise en référence.

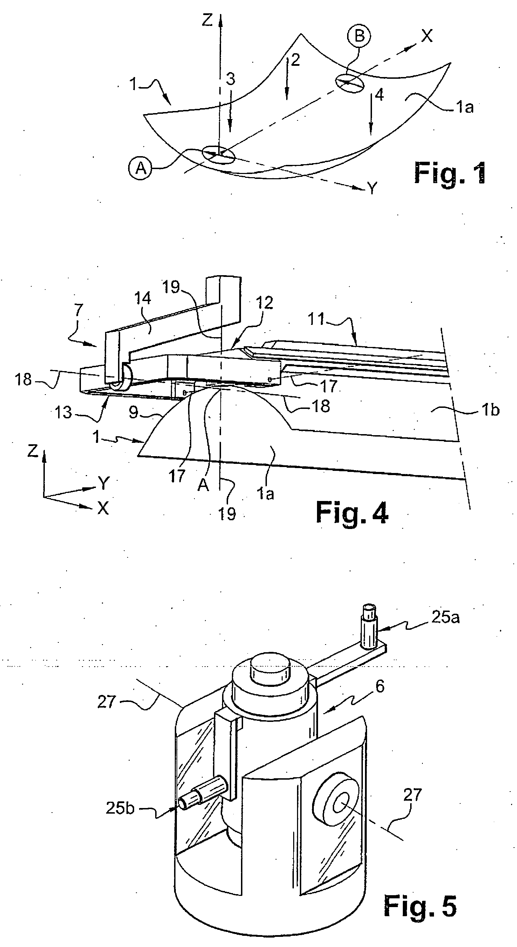

Selon l'art de la mise en référence, la mise en position d'un solide est dite *isostatique* lorsque les 6 degrés de liberté qu'il possède dans l'espace (3 rotations et 3 translations selon les axes du triède) sont arrêtés (supprimés) par l'intermédiaire du contact avec 6 points matériels judicieusement positionnés. La mise en position isostatique d'un panneau non-développable est réalisée conformément à la figure 1 des dessins annexés à la présente description.

Sur cette figure 1 est représenté en 1 un panneau métallique mince à forme non-développable obtenu par étirage et dans lequel sont ménagés au voisinage de deux bords opposés, deux trous A et B, dits de brochage, généralement de diamètre 12 et 14 mm. Ces trous sont percés au moment de l'étirage lorsque l'ébauche est encore placée sur la forme. Ils servent respectivement de centrage et d'orientation, et comme illustré par la figure, arrêtent les translations selon les axes X et Y ainsi que la rotations selon l'axe Z ( X étant défini comme l'axe passant par les centres des deux trous A et B.

Les trois autres degrés de libertés sont supprimés par trois points de contacts 2, 3 et 4 définissant un plan dans l'espace.

Repéré dans l'espace de cette manière, le panneau 1 ne subit aucune contrainte liée à sa mise en position. En revanche, si l'on souhaite augmenter le nombre de points de contacts, ceux ci étant fixes dans l'espace, le système devient « *hyperstatique* », et la mise en contact du solide (panneau 1) avec les différents points ne pourra s'effectuer qu'en déformant le solide et donc en y engendrant des contraintes internes de bridage.

Dans le cas du panneau de revêtement 1, par définition de faible épaisseur en comparaison du volume qu'il représente, le « solide » à mettre en référence est déformable sous l'action d'efforts modestes tels que des efforts de coupe ou même son propre poids. Par suite, la mise en position selon les seuls principes de l'isostatisme n'est pas suffisante pour assurer une mise en référence convenable du panneau : il faut le « rigidifier » en le soutenant sur beaucoup plus de points qu'il n'est nécessaire à son strict repérage dans l'espace. Partant de ce principe il existe classiquement deux méthodes de mise et de maintien en position de pièces de forme complexe, flexibles et de grande dimension, à savoir la mise en référence sur un outillage rigide et la mise en référence sur un lit de ventouses.

La mise en référence sur un outillage rigide consiste à réaliser un outillage rigide de la même forme que la pièce. Le maintien en position est assuré par une mise en dépression. Dans le cas d'une forme non-développable, cette mise en position, hyperstatique, ne permet pas de supporter le panneau sur l'ensemble de sa surface, de plus elle contraint fortement la pièce. Ces contraintes de bridage introduisent une déformation élastique évolutive dans l'épaisseur du panneau. L'usinage d'une pièce ainsi contrainte dans l'épaisseur entraîne un déséquilibre dans la répartition des contraintes et, par suite, une évolution de la forme du panneau.

La mise en référence sur un lit de ventouses est une solution qui, en limitant le nombre de point d'appui, limite le degré d'hyperstatisme, et, par la suite, les contraintes internes de bridage. Elle est efficace pour toutes les opérations de détourage. En revanche la réalisation d'usinages dans l'épaisseur requiert un accroissement important de la densité des appuis. Par exemple, si les opérations de détourage se contentent d'un pas entre appuis de l'ordre de 500 mm, les opérations d'usinage des poches demandent, elles, un pas d'appui inférieur à 150 mm. Par suite, cette solution produit un résultat similaire, en termes de qualité de mise en position, à ce qui est obtenu sur un outillage rigide.

On connaît par ailleurs par le document EP 0507033 un équipement de machine outil pour soutenir et usiner des pièces. Cet équipement comprend une pluralité de colonnes de support groupées sur des unités modulaires. Chaque colonne de support est pourvue d'un système moteur pour les déplacements verticaux d'éléments de fixation de pièces à usiner, lesquels sont placés à l'extrémité supérieure de la colonne. Chaque colonne est elle-même associée à des organes moteurs prévus pour son déplacement le long d'une unité modulaire, tandis que cette unité modulaire peut se déplacer indépendamment le long de voies de guidage longitudinales sur lesquelles elle est montée. Un système de contrôle par ordinateur permet de commander l'intégralité de l'équipement. On obtient ainsi un équipement permettant de positionner, de manière totalement automatique, rapide et absolument précise, chacune des colonnes de support le long de trois directions perpendiculaires pour la mise en place de l'élément de fixation à l'extrémité supérieure de chaque colonne dans une position approprié. L'élément de fixation est une ventouse. Ainsi, le contact entre la ventouse et la pièce est assuré même quand la surface de la pièce présente des irregularités. Les solutions visant une mise en position sur la surface globale du panneau ne permettent pas de repérer efficacement la forme dans l'espace et engendrent des contraintes de bridage importantes qui en se relaxant vont conduire à des modifications de forme.

La présente invention vise à pallier aux inconvénients des méthodes conventionnelles de mise en référence et propose un procédé d'usinage permettant la mise en maintien en position d'un panneau non-développable par exemple étiré sans contrainte, avec mise en référence sur sa face convexe externe, en se basant sur sa définition théorique (face interne), en vue de la réalisation d'usinages mécanique de précision tels que ceux énumérés plus haut.

A cet effet, l'invention a pour objet un procédé d'usinage de panneaux minces, en particulier de forme complexe, notamment non-développable, dans lequel le panneau à usiner est préalablement mis en position isostatique, caractérisé en ce que :
- on définit sur le panneau, dans le ou les parties à usiner, une ou plusieurs zones d'usinage d'étendue déterminée, dénommées fenêtres d'usinage, et
- au droit de chaque fenêtre d'usinage :
   - on maintient en position l'une des faces du panneau sans introduire d'hyperstatisme de positionnement,
   - on mesure la forme réelle de ladite face,
   - on réalise sur la face opposée l'usinage à effectuer en prenant comme référence ladite face mesurée, et
   - on relâche ladite face.

Avec un tel procédé, à chaque fenêtrage, c'est-à-dire, à chaque usinage réalisé au droit de chaque fenêtre d'usinage, on effectue une nouvelle mise en référence assurant une correction « automatique » de l'éventuel écart de parallélisme pouvant exister localement entre les faces opposées du panneau.

L'invention a également pour objet un dispositif pour la mise en oeuvre du procédé, comprenant des moyens de mise en position isostatique du panneau à usiner, caractérisé en ce qu'il comprend en outre :
- des moyens de maintien en position, sans introduire d'hyperstatisme, de l'une des faces du panneau, sur une étendue déterminée,
- des moyens de mesure de la forme réelle de la partie de ladite face en regard desdits moyens de maintien,
- des moyens de déplacement desdits moyens de maintien en regard de ladite face du panneau,
- des moyens d'usinage multi-axes agencés en regard de l'autre face du panneau, et
- des moyens pour commander en synchronisme :
   - déplacement et mise en place desdits moyens de maintien en regard successivement de chacune desdites fenêtres d'usinage,
   - l'usinage par lesdits moyens d'usinage au droit successivement de chaque fenêtre d'usinage.

Suivant un mode de réalisation du dispositif selon l'invention lesdits moyens de maintien en position sans hyperstatisme sont constitués d'un support comportant :
au moins deux butées de positionnement concourant avec lesdits moyens de mise en position isostatique à assurer le positionnement isostatique,
- une pluralité de ventouses de préhension mobiles en position normalement à ladite face à maintenir,
- et des moyens de mise en contact et blocage en position de préhension de chaque ventouse avec ladite face, après positionnement isostatique du panneau.

Suivant une autre caractéristique du dispositif de l'invention, lesdits moyens de mesure de la forme réelle de la face du panneau en regard desdits moyens de maintien en position sont constitués, pour chacune desdites ventouses, d'un capteur de mesure de la position de la ventouse après blocage en position de préhension de la face du panneau , lesdits capteurs étant reliés à des moyens de calcul de la forme de la face du panneau par interpolation des positions des différentes ventouses.

La mise en position isostatique du panneau est réalisée à partir du principe évoqué plus haut mettant en oeuvre deux trous de brochage réalisés en périphérie du panneau à usiner, sur deux bords opposés et trois points de contact de référence sur le panneau.

Le procédé de l'invention peut être mis en oeuvre suivant deux variantes d'un tel positionnement.

Suivant un premier mode, à chaque fenêtre d'usinage et préalablement à la préhension et au maintien de la face du panneau, on met en appui ladite face contre trois points de référence situés dans la fenêtre.

Ces trois points de référence peuvent être constitués par trois desdites butées de positionnement desdits moyens de maintien en position.

Suivant un second mode, toujours à chaque fenêtre et préalablement à la préhension et au maintien de la face du panneau, on met en appui ladite face contre deux points de référence situés dans la fenêtre, le troisième point de référence étant l'un des deux trous de brochage susdits.

Les deux premiers points de référence peuvent être constitués par deux desdites butées de positionnement desdits moyens de maintien en position.

En outre, de préférence, à ces moyens de mise en position isostatique est associé un dispositif d'application du panneau contre lesdites butées de positionnement pour la mise en position isostatique préalablement à la saisie de la face du panneau au droit de la fenêtre.

Le procédé de l'invention permet des améliorations significatives par rapport aux procédés existants, notamment dans la réalisation d'empochements requérant une précision de fond de maille inférieure à 0,2mm.

En effet, le procédé permet notamment:
- une mise en position isostatique sans contrainte du panneau (pas de déformation en cours d'usinage),
- une programmation FAO (trajectoires d'usinage et positionnement fenêtrage) « au théorique »,
- une mise en référence sur la face externe du panneau (garantie des épaisseurs de fond de maille),
- une mesure de la forme réelle instantanée et au plus proche des appuis (pas de changement de repère).

D'autres caractéristiques et avantages ressortiront de la description qui va suivre de modes de mise en oeuvre de procédé de l'invention, description donnée à titre d'exemple uniquement et en regard des dessins annexés sur lesquels :
- Figure 1 est une représentation schématique de la mise en position isostatique d'une pièce en forme de panneau à double courbure ;
- Figure 2 est une vue en perspective schématique d'un dispositif pour la mise en oeuvre du procédé de l'invention ;
- Figure 3 est une vue en perspective sous un autre angle du dispositif de la figure 2.
- Figure 4 est une vue partielle des moyens de positionnement isostatiques du dispositif de la figure 2 ;
- Figure 5 est une vue de moyens complémentaires de positionnement du panneau associés à la tête d'usinage ;
- Figure 6 représente en perspective des moyens de préhension et maintien en position localisée de l'une des faces d'un panneau à usiner ;
- Figure 7 est une vue plus en détail du système à ventouse desdits moyens de préhension et maintien;
- Figure 8 est une vue en coupe axiale du système à ventouse de la figure 7 ;
- Figures 9a, 9b et 9c illustrent la mise en place et le blocage en position des ventouses ;
- Figures 10a et 10b illustrent un premier mode de positionnement isostatique ;
- Figures 11a et 11b illustrent un second mode de positionnement isostatique ;
- Figure 12 est un schéma illustrant le positionnement de la tête d'usinage au cours d'un usinage dans une fenêtre ;
- Figure 13 est un schéma illustrant le mode de déplacement de la fenêtre d'usinage dans le cas d'un positionnement isostatique selon les figures 11a, 11b.
- Figure 14 est un organigramme décrivant le mode d'actionnement des moyens de maintien à ventouses en mode conforme aux figures 10a, 10b ;
- Figure 15 est un organigramme décrivant le mode d'actionnement des moyens de maintien à ventouses en mode conforme aux figures 11a, 11b ;
- Figure 16 est un schéma synoptique illustrant le principe de correction de la trajectoire d'usinage, et
- Figure 17 est une vue analogue à celle de la figure 6 montrant la position en retrait de certaines ventouses pour l'usinage notamment d'un détourage.

Sur la figure 1 est rappelé schématiquement le principe de la mise en position isostatique d'un panneau 1 du type à double courbure.

Le panneau 1 est un panneau flexible d'épaisseur mince et de forme non-développable, par exemple un panneau métallique de revêtement de fuselage d'aéronef préalablement mis en forme à la manière connue par étirage sur une forme convexe.

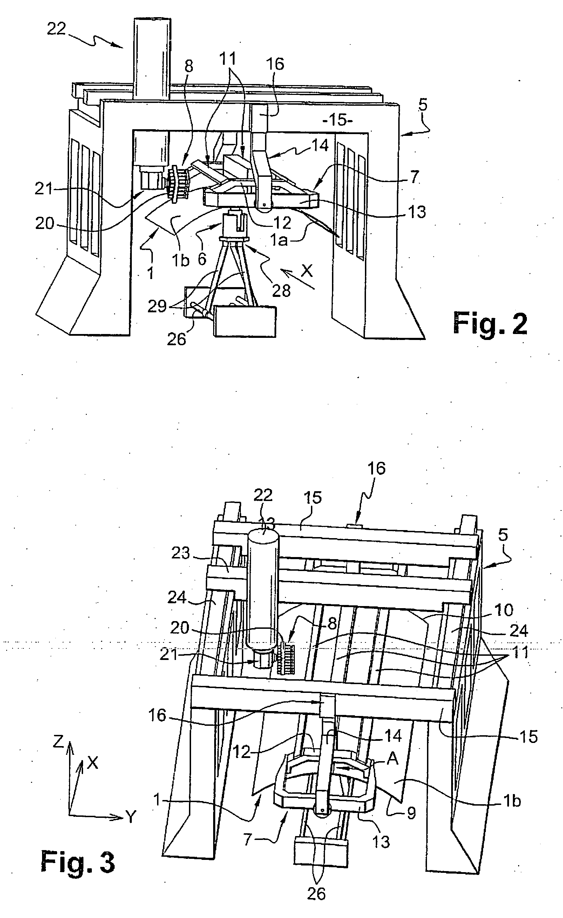

Comme décrit plus haut, un tel panneau 1 présente des variations d'épaisseur sur toute la surface. La face géométriquement connue du panneau 1 est la face interne 1a, concave, qui a été en contact avec la forme d'étirage. La face de référence est la face opposée 1b (figures 2 et suivantes), convexe, qui correspond à la paroi externe du fuselage qui sera réalisé à l'aide du panneau.

Le panneau 1 étant usiné sur sa face géométriquement connue 1a, alors que la face de référence est la face 1b et que l'epaisseur du panneau est susceptible de variations qui ne sont pas connues, il se pose évidemment un problème d'usinage si l'on veut réaliser notamment des empochements dont les fonds de maille respectent une précision d'usinage très sévère, par exemple une précision inférieure à 0,2 mm.

Le dispositif de mise en oeuvre du procédé de l'invention représenté schématiquement sur la figure 2 comprend un bâti 5 en forme de portique sous lequel est disposé un panneau 1 à usiner du type à double courbure, présentant sa face concave 1a tournée vers le sol.

En dessous du panneau 1 est disposée une tête d'usinage 6 multi-axes.

Au dessus du panneau 1 sont agencés, d'une part, des moyens 7 de support et positionnement du panneau, portés par le portique 5, et , d'autre part, des moyens 8 de maintien localisé de la face supérieure convexe 1b du panneau 1, également portés par le portique.

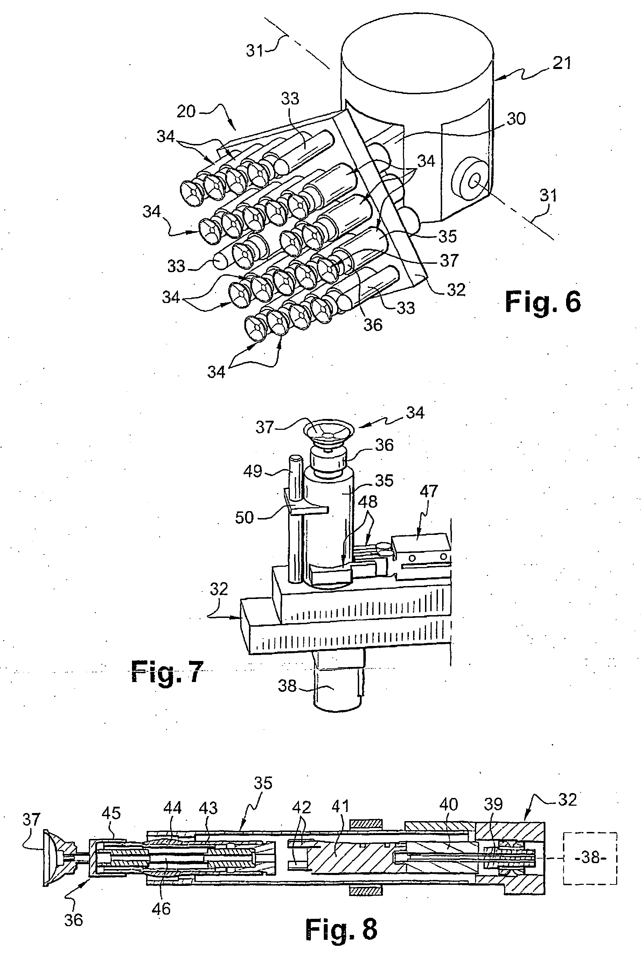

On va décrire maintenant ces moyens 7,8 en se référant également aux figures 3 et 4.

Le panneau 1 est positionné en reprenant deux trous de brochage A et B conformément au schéma de la figure 1, l'un (A) de ces trous étant repéré sur la figure 4 au voisinage d'un bord 9 du panneau, l'autre trou étant disposé au voisinage du bord opposé 10.

Le panneau 1 est supporté au droit des trous A et B par un ensemble 11 de trois poutres horizontales fixées elles-mêmes à leurs extrémités à deux palonniers 12 disposés perpendiculairement à la poutre et dont les extrémités sont elles-mêmes montées sur des étriers 13.

Les étriers 13 sont eux-mêmes repris par des bras 14, montés coulissants suivant l'axe vertical Z sur des traverses 15 du portique 5, par l'intermédiaire d'une liaison glissière symbolisée en 16.

Les palonniers 12 peuvent osciller sur les extrémités des étriers 13 autour d'un axe 17 passant par l'un des trous de brochage (A,B).

Les étriers 13 peuvent osciller à l'extrémité inférieure des bras 14 autour d'un axe horizontal 18 parallèle à l'axe X, lui-même parallèle à l'axe du système de poutres 11, l'axe 18 passant par le trou de brochage (A ou B) associé à l'étrier.

Enfin, les bras 14 peuvent coulisser suivant un axe vertical 19 passant également par le trou de brochage (A ou B) associé.

Les moyens 8 de maintien localisé de la face convexe 1 b du panneau 1 sont constitués d'un dispositif à ventouses 20 monté sur une tête multi-axes 21 d'un manipulateur 22 porté par le portique 5.

La tête 21 peut se déplacer sur le manipulateur 22 suivant l'axe Z, cependant que le manipulateur peut se déplacer suivant l'axe Y sur une traverse mobile 23 du portique 5 ainsi que suivant l'axe X par un déplacement de la traverse 23 sur des crémaillères 24 solidaires du portique.

Comme on peut l'observer sur la figure 3, la traverse 15 supportant le panneau 1, côté 10, est monté coulissante sur les mêmes crémaillères 24 à des fins d'adaptation à des entraxes A-B de panneaux différents et également pour assurer la cinématique de type parallélogramme déformable lors de la rotation du panneau 1 autour de l'axe 17, la traverse 15 située du côté 9 du panneau étant fixe.

Sur la figure 5 est représentée en vue agrandie la tête d'usinage, dépourvue de l'outil d'usinage, mais équipée d'un dispositif complémentaire de positionnement du panneau 1 constitué par une paire de bras pousseurs dont un (25a) est en position active, l'autre (25b) étant en position escamotée, inactive, le fonctionnement de ce dispositif étant explicité plus loin.

La tête d'usinage présente plusieurs degrés de liberté, cinq par exemple, et peut notamment se déplacer suivant l'axe X, en étant montée à cet effet coulissante sur des glissières 26 et en rotation autour d'un axe 27 (figure 5) qui peut lui-même pivoter dans un plan horizontal grâce à des liaisons rotulées 28 entre le support de la tête d'usinage 6 et les pieds porteurs 29.

Sur la figure 6 est représenté plus en détail le dispositif à ventouses 20, monté rotatif sur un bras support 30, lui-même monté oscillant autour d'un axe horizontal 31 sur la tête de présentation 21, elle-même mobile en translation suivant l'axe Z et en rotation autour de ce dernier axe:

Le dispositif 20 comprend une platine support 32, par exemple carrée, de 500 mm de côté, sur la face tournée vers le panneau 1 de laquelle sont disposés en saillie, d'une part trois butées fixes 33, disposées en triangle et, d'autre part, des dispositifs à ventouse 34 régulièrement distribués, l'ensemble des éléments 33,34 couvrant l'ensemble de la surface de la platine 32.

Les butées 33 sont des pions rectilignes à bout sphérique disposés perpendiculairement à la platine 32 et de même longueur.

Les butées 33 sont de préférence le plus éloigné possible entre elles et sont, comme illustré par la figure 6, disposées, deux dans deux angles de la platine 32 et la troisième au milieu du côté opposé de la platine.

Les dispositifs à ventouse 34 sont de préférence régulièrement répartis et alignés sur toute la surface restante de la platine, parallèlement aux butées 33, avec un pas entre dispositifs 34 constant, inférieur à 150 mm.

Chaque dispositif 34 comprend (figures 6 à 8) un fourreau 35 monté mobile axialement sur la platine 32 et dans lequel coulisse un centreur 36 muni à son extrémité d'une ventouse 37.

Le fourreau 35 est mû par un dispositif d'entraînement-blocage comprenant un moteur 38 entraînant une vis à bille 39 arrêtée dans la platine 32, par l'intermédiaire d'un roulement, un écrou 40 en prise avec la vis 39 et un dispositif d'accrochage 41 solidaire de l'écrou 40 dont les mors 42, lorsqu'ils sont écartés, se plaquent contre la paroi interne du fourreau 35 rendant celui-ci solidaire de l'écrou 40.

Le fourreau 35 porte à son extrémité le dispositif de centrage (36) et d'aspiration (37) comprenant (figures 9a, 9b) un fourreau 43 relié au fourreau 35 par l'intermédiaire d'une liaison rotulée 44 et fermé par un couvercle 45 mobile par rapport au fourreau 43, axialement à ce dernier sous l'action d'un élément pneumatique dénommé muscle 46, susceptible de contraction (figure 9b) ou d'élongation (relâchement, figure 9a).

En 47, sur la figure 7, est représenté un dispositif de blocage du fourreau 35 par rapport à la platine 32. Le dispositif 47 est fixé sur la platine et enserre par deux bras 48 le fourreau 35.

En 49 est représenté un capteur de mesure de la distance le séparant de la face du panneau en regard, c'est-à-dire de l'éloignement de la ventouse 37 vis à vis de la platine 32.

Le capteur 49 est fixé par une patte 50 latéralement au fourreau 35.

Le fonctionnement du dispositif décrit ci-dessus est le suivant.

Le panneau 1 à maintenir est tout d'abord amené en contact par sa face convexe 1b, par exemple, contre les trois butées 33 du dispositif de la figure 6, sans déformation du panneau, par l'intermédiaire des bras pousseurs 25a, 25b, appliqués contre la face concave 1a en direction de la platine-support 32 du dispositif.

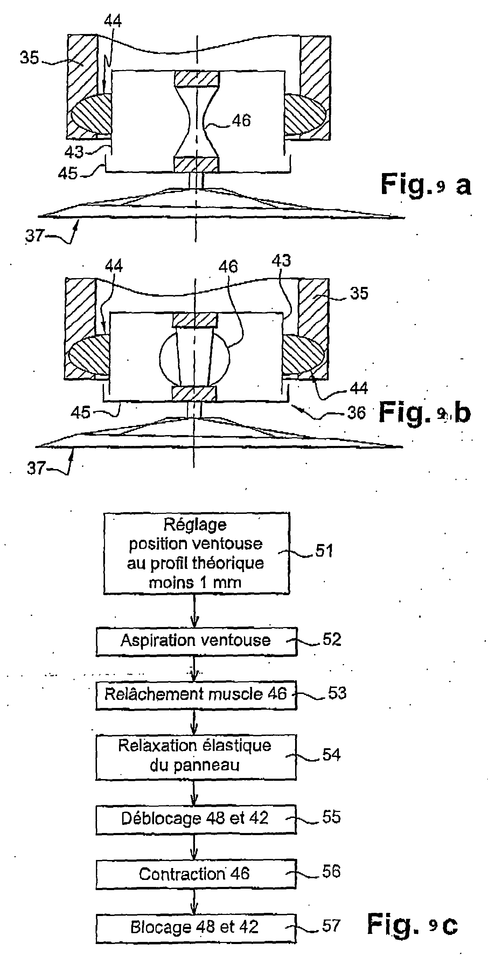

Lorsque le contact est établi un positionnement initial (étape 51, figure 9c) des dispositifs à ventouse 34 est effectué en actionnant le moteur 38 des dispositifs 34.

La mise en rotation de la vis 39 entraîne, les mors 42 du dispositif d'accrochage 41 étant mis en expansion et les bras 48 du dispositif 47 étant desserrés, le déplacement en translation de l'ensemble fourreau 35- centreur 36 en direction de la face 1a du panneau 1

Une fois le fourreau 35 arrivé au contact de la face 1a, cette position étant détectée par le capteur 49, le moteur 38 est arrêté et les bras 48 sont serrés par le dispositif 47 immobilisant ainsi le fourreau 35 par rapport à la platine 32.

L'étape suivante (étape 52, figure 9c) est la mise en dépression des ventouses 37 ensemble. Le panneau 1 ainsi « aspiré » vient se coller contre le fond des ventouses. Celles-ci étant décalées, par exemple de 1 mm, par rapport à la position théorique du panneau, celui-ci est mis localement en contrainte.

Les muscles 46 (figure 9a) sont alors relâchés (étape 53, figure 9c) en sorte que, par retour élastique, le panneau 1 reprend sa forme libre de contrainte, le couvercle 45 se désolidarisant du fourreau 43.

La ventouse 37 est alors collée sur le panneau et l'ensemble 37, 45 étant maintenu par l'élasticité (à vide) du muscle pneumatique 46. Du fait de leur propre poids, faible, et de leur maintien par l'élasticité du muscle 46, lesdits éléments 37, 45 ne sollicitent pas ou peu le panneau (étape 54, figure 9c).

La totalité des centreurs 36 sont ainsi désolidarisés en même temps de leur fourreau 35.

L'étape suivante consiste à re-rigidifier l'ensemble 32-34, le panneau ayant repris sa forme naturelle, sans contrainte.

On va opérer à ce moment ventouse par ventouse pour ne pas déformer le panneau.

Ainsi, pour chaque dispositif 34, on va (étape 55, figure 9c) libérer extérieurement le fourreau 35 en desserrant les bras 48 et rétracter les mors 42 pour libérer intérieurement le fourreau 35. En recontractant (étape 56; figure 9c) le muscle 46, l'ensemble 36-35 se rapproche du panneau 1 et le fourreau 43 se réemboîte dans le couvercle 45 (figure 9b).

La dernière étape (étape 57, figure 9c) consiste à re-immobiliser le fourreau 35 par rapport à la platine 32, par les mors 42 du dispositif 41 et par les bras 48 du dispositif 47.

On opère ainsi successivement avec tous les dispositifs 34.

Le panneau 1 est, au droit de la platine 32, parfaitement immobilisé, de manière stable, sans déformation ni contrainte dans cette partie du panneau et, de surcroît, on peut connaître la forme réelle de la face 1a en regard de la platine 32 par calcul à partir des mesures données par les capteurs 49 qui donnent la position précise de la face 1a par rapport à la platine 32 au droit de chaque dispositif à ventouse 34. Un calcul par interpolation à partir de ces points de mesure permet de connaître la forme réelle de ladite face 1a.

Le fonctionnement de la machine représenté sur les figures 2 à 5 est le suivant.

La première étape de mise en oeuvre du procédé de l'invention est le repérage isostatique du panneau à usiner 1 dans l'espace machine, lequel est effectué conjointement par les moyens 7 et les moyens 8.

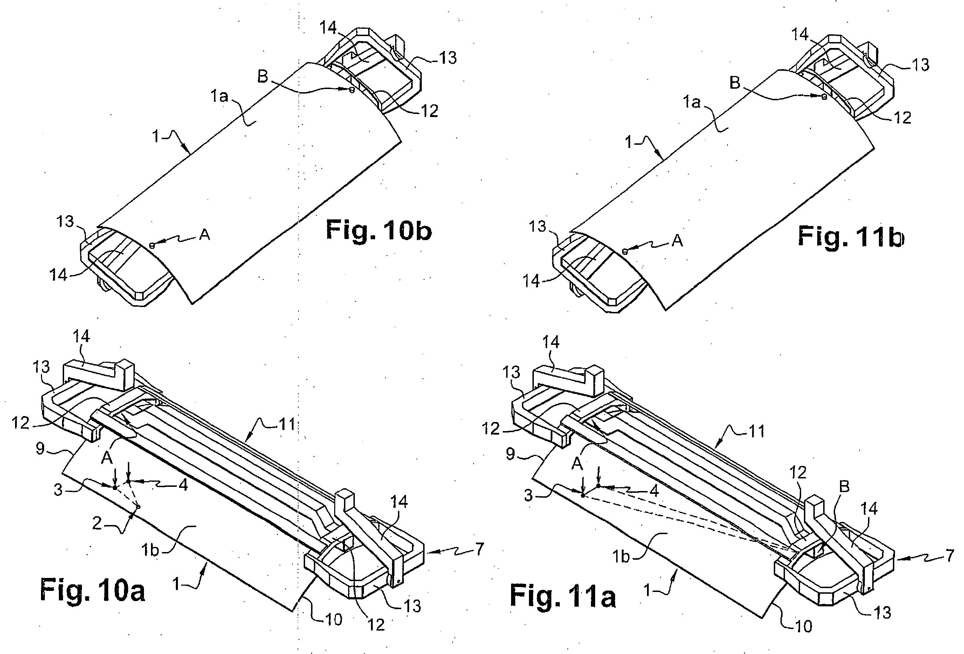

On va supposer en un premier temps que la mise en position s'effectue selon la cinématique illustrée par les figures 10a, 10b, la figure 10b étant une vue de dessous du panneau 1 de la figure 10a suspendu aux moyens de support 7.

La mise en position isostatique est ici assurée par les trous de brochage A et B repris par des moyens 7 et par trois points d'appui complémentaires 2,3,4 assurés par les trois butées 33 des moyens 8 qui définissent ainsi un plan de référence.

La séquence de mise en position se déroule de la manière suivante.

Les moyens 8 sont au préalable disposés à la position théorique de la face 1 b du panneau 1. Puis, les bras escamotables 25a, 25b de la tête d'usinage 6 sont sortis et appliqué contre l'autre face 1a du panneau en sorte de pousser ce dernier contre les butées 33. Les moyens d'asservissement des moyens moteurs de déplacement des éléments 11, 13 et 14 suivant les axes 17, 18 et 19 (figure 4) bloquent lesdits éléments dans leur position.

Ensuite, les ventouses 6 sont amenées en position de saisie de la face 1b du panneau et mises sous vide et, enfin, les bras 25a, 25b sont escamotés.

Les dispositifs à ventouse 6 s'adaptent automatiquement à la forme du panneau 1. Les capteurs de mesure 49 permettant en même temps d'identifier cette forme de manière précise. Le temps total d'adaptation à la forme pratique du panneau est de l'ordre de quelques centaines de millisecondes, y compris la mesure du profil de la face 1b du panneau.

Les moyens 8 que l'on appellera fenêtre d'usinage sont positionnés sur une zone de la face 1b où doit s'affecter un usinage par la tête 6.

Une fois l'usinage réalisé (perçage, détourage ou usinage d'un empochement) ladite fenêtre 8 est décrochée du panneau, et déplacée pour être positionnée à hauteur d'une autre zone de la face 1b, contiguë ou non à la zone qui vient d'être usinée.

Dans le cas du mode de positionnement des figures 10a, 10b, le plan de référence pour l'usinage est défini par la fenêtre 8, à savoir par les trois butées 33 (points d'appui 2, 3 et 4).

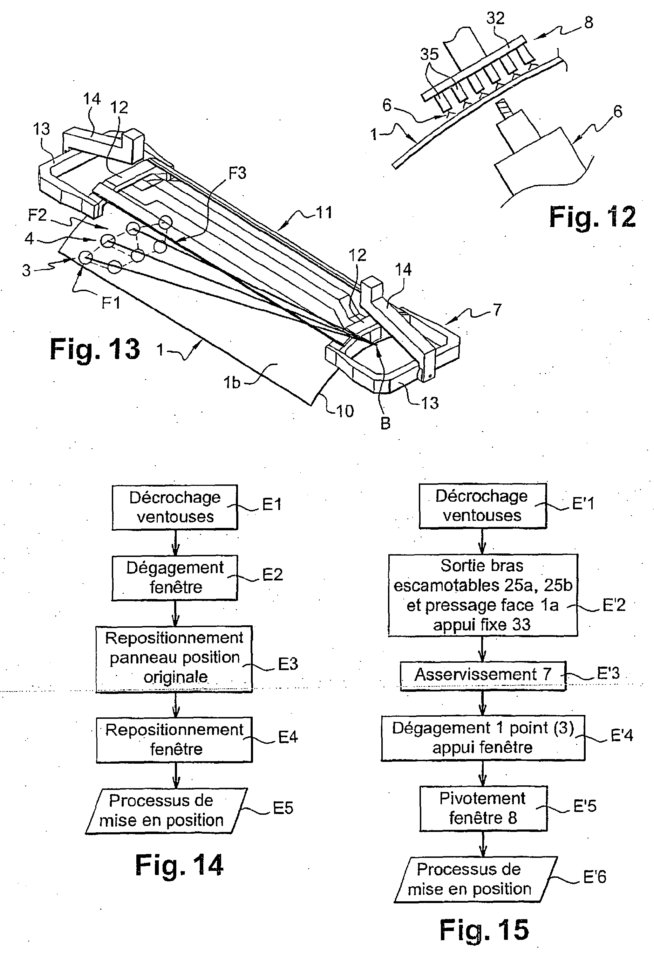

Le processus de décrochage de la fenêtre 8 et de repositionnement en un autre endroit est illustré par l'organigramme de la figure 14.

A l'étape E1, les ventouses 37 sont décrochées, puis, étape E2, la fenêtre 8 est dégagée.

A l'étape E3, le panneau 1 est repositionné par les moyens 7.

A l'étape E4 la fenêtre 8 est repositionnée avec le concours des bras 25a, 25b et à l'étape E5 les ventouses 37 sont repositionnées en saisie de la face 1 b du panneau, avec mesure du profil de cette zone du panneau.

Cette cinématique de positionnement et déplacement de la fenêtre 8 est préférable pour l'usinage d'empochement de dimensions (étendue) inférieure à celle de la fenêtre 8.

La mise en position du panneau 1 peut s'effectuer suivant un second mode illustré par les figures a et 11b, la figure 11b étant une vue de dessous du dispositif de la figure 11a.

La mise en position isostatique est ici assurée par les trous de brochage A et B repris par les moyens 7 et par deux points d'appui complémentaires 3 et 4 assurés par deux des trois butées 33 de la fenêtre 8, lesquels points 3 et 4 définissent avec l'un (B) des points de brochage un plan de référence.

La séquence de mise en position se déroule de la manière suivante :
La fenêtre 8 est au préalable disposée à la position théorique de la face 1b du panneau 1 suivant le même processus que celui décrit plus haut à propos du mode de positionnement selon les figures 10a, 10b.

Le mode de positionnement selon les figures 11a, 11b permet une progression du fenêtrage, c'est-à-dire de l'usinage dans une zone déterminée de la face 1a à une zone adjacente par un déplacement de la fenêtre 8 à la manière d'un arpenteur, comme illustré par la figure 13 et par la figure 15 qui est un organigramme du processus de progression de la fenêtre.

Sur la figure 13 on a illustré le passage de la fenêtre 8 d'une première position F1 à une deuxième position F2 immédiatement adjacente, puis à une troisième position F3 également immédiatement adjacente.

Sur la figure 15 l'étape E'1 est une étape de décrochage des ventouses 37 (cas du passage par exemple d'une position F1 à la position suivante F2).

A l'étape E'2 les bras escamotables 25a et 25b sont appliqués contre la face 1a du panneau en sorte de presser ce dernier contre l'une des butées 33 de la fenêtre 8 (par exemple point 4, figure 13).

A l'étape E'4, on dégage la seconde butée 33 utilisée (point 3, figure 13).

A l'étape E'5, on fait pivoter la fenêtre 8 autour du point 4 pour l'amener à la position suivante F2.

A l'étape E'6 les ventouses 37 sont repositionnées en saisie de la face 1b du panneau, avec mesure du profil de cette nouvelle zone adjacente à la précédente.

Ensuite, par un processus identique on passe de la position de fenêtrage F2 à la position F3 par rotation de la fenêtre 8 autour du point 3 dans sa nouvelle version, le point 4 étant alors dégagé, et ainsi de suite de proche en poche pour couvrir toute la zone à usiner sur la face 1a du panneau.

Ce mode de déplacement de la fenêtre 8 est approprié notamment à l'usinage d'empochements ou au détourage sur des étendues supérieures à celle couverte par la fenêtre 8.

Quel que soit le mode de progression choisi, le processus de maintien en position et d'accrochage de la fenêtre 8 conduit à une mesure de la position et de la forme de la « peau extérieure » (1a) du panneau 1 et garantit son contact avec le fond des ventouses 37 (référence de mesure). Cette information peut être utilisée pour corriger la trajectoire correspondant à l'usinage considéré.

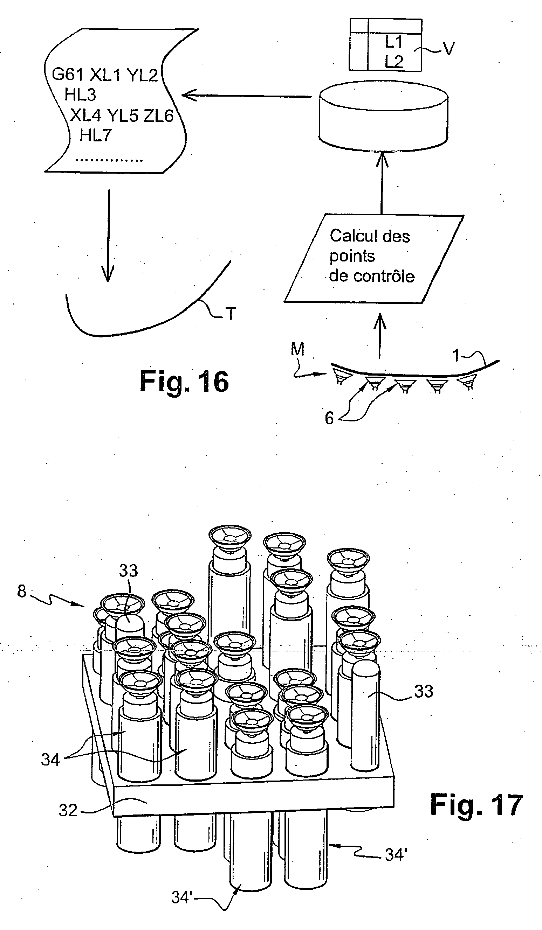

La figure 16 est un synoptique du principe de correction de trajectoire in situ.

La courbe représentée en T est la trajectoire en profil réel. A partir des mesures de surface M réalisées lors du verrouillage en position des ventouses 37 on stocke les coordonnées relatives à ces mesures dans une table dite des variables V. Puis on lit les valeurs de cette table V pour les substituer aux variables de la trajectoire. Le degré et la forme de la fonction d'interpolation étant fixés par avance, le calcul des points de contrôle à partir des points de mesure (M) est une opération mathématique simple parfaitement réalisable dans l'ordinateur de commande de la machine. Le temps nécessaire à ce processus est de quelques millisecondes. Le principe est ici présenté dans le cas d'une trajectoire 3 axes. Il se généralise à la programmation 5axes avec génération de deux courbes interpolées (une pour la trajectoire et l'autre pour l'orientation), les deux étant liées par dérivation.

La figure 12 est un schéma illustrant les positions mutuelles de la fenêtre 8 et de l'outil d'usinage 6 lors par exemple de la réalisation d'un empochement sur la face 1a du panneau 1.

Une opération de détourage se réalise selon des principes similaires à l'usinage d'un empochement. On utilisera de préférence une cinématique de déplacement de la fenêtre 8 selon la figure 13. En outre, du fait de la traversée du panneau par la fraise les dispositifs à ventouse 34 de la fenêtre 8 susceptibles de se trouver sur le trajet de la fraise seront escamotés comme illustré par la figure 17 où certains des dispositifs (34') sont mise en position basse de retrait en actionnant les moteurs 38, les bras 48 des dispositifs de blocage 47 étant desserrés et les mors 42 des dispositifs d'accrochage 41 étant rétractés.

Par ailleurs, de l'air comprimé est soufflé à travers les ventouses concernées de manière à éviter les dépôts de copeaux. Le détourage est enfin réalisé en laissant des ponts tous les 500 mm environ ce qui correspond à la largeur de la fenêtre 8 dans l'exemple décrit, de façon à conserver les chutes attachées au panneau 1.

Le procédé de l'invention présente les avantages suivant :
- Mise en positionnant isostatique sans contrainte du panneau 1 (pas de déformation en cours d'usinage)
- Programmation FAO (trajectoires d'usinage et positionnement fenêtrage) « au théorique »
- Mise en référence sur la face externe (1b) du panneau (garantie des épaisseurs de fond de maille)
- Mesure de la forme réelle instantanée et au plus proche des appuis (33) (pas de changement de repère)
- Correction de trajectoire instantanée
- Deux modes de travail (associés à 2 cinématiques de mise en position)
- Changement de mode de travail possible à tout moment sans changement d'équipement
- Asservissement « complexes » (mise en position, adaptation de la fenêtre 8, correction de trajectoire, etc....) hors phase d'usinage (sécurité pour la pièce 1).

Il est à noter que les positions de l'outillage 6 et des moyens 8 de maintien peuvent être inversées, les moyens 8 étant appliqués sur la face concave 1a du panneau 1.

Bien entendu, l'invention s'applique à tous types de panneau, quel que soit son matériau constitutif, métallique ou matériau composite par exemple, et quel que soit le processus de fabrication.

## Revendications

1. Procédé d'usinage de panneaux minces, en particulier de forme complexe, notamment non-développable, dans lequel le panneau à usiner (1) est préalablement mis en position isostatique,
- on définit sur le panneau (1), dans le ou les parties à usiner, une ou plusieurs zones d'usinage d'étendue déterminée, dénommées fenêtres d'usinage,
**caractérisé en ce qu'**
- au droit de chaque fenêtre d'usinage :
• on maintient en position l'une des faces (1b) du panneau (1) sans introduire d'hyperstatisme de positionnement,
• on mesure la forme réelle de ladite face (1b),
• on réalise sur la face opposée (1a) l'usinage à effectuer en prenant comme référence ladite face (1b) mesurée, et
• on relâche ladite face (1b).

2. Procédé suivant la revendication 1, **caractérisé en ce que** l'on réalise la mise en position isostatique du panneau (1) en utilisant deux trous de brochage (A,B) du panneau et trois points de référence (2,3,4) situés dans la fenêtre d'usinage.

3. Procédé suivant la revendication 1, **caractérisé en ce que** l'on réalise la mise en position isostatique du panneau (1) en utilisant deux trous de brochage (A,B) du panneau et deux points de référence (3,4) situés dans la fenêtre d'usinage, un troisième point de référence étant constitué par l'un desdits trous de brochage (A,B).

4. Dispositif pour la mise en oeuvre du procédé selon l'une des revendications 1 à 3, comprenant des moyens (7) de mise en position isostatique du panneau à usiner (1), **caractérisé en ce qu'**il comprend en outre :
- des moyens (8) de maintien en position, sans introduire d'hyperstatisme, de l'une des faces (1b) du panneau, sur une étendue déterminée,
- des moyens (49) de mesure de la forme réelle de la partie de ladite face en regard desdits moyens de maintien (8),
- des moyens (7) de déplacement desdits moyens de maintien en regard de ladite face (1b) du panneau,
- des moyens d'usinage multi-axes (6) agencés en regard de l'autre face (1a) du panneau, et
- des moyens pour commander en synchronisme :
• les déplacement et mise en place desdits moyens de maintien (8) en regard successivement de chacune desdites fenêtres d'usinage (F1,F2,F3),
• l'usinage par lesdits moyens d'usinage (6) au droit successivement de chaque fenêtre d'usinage (F1,F2,F3).

5. Dispositif suivant la revendication 4, **caractérisé en ce que** lesdits moyens (8) de maintien en position sans hyperstatisme sont constitués d'un support (32) comportant :
- au moins deux butées de positionnement (33) concourant avec lesdits moyens (7) de mise en position isostatique à assurer le positionnement isostatique,
- une pluralité de ventouses (37) de préhension mobiles en position normalement à ladite face (1b) à maintenir.
- et des moyens de mise en contact et blocage en position de préhension de chaque ventouse (37) avec ladite face (1b), après positionnement isostatique du panneau (1)

6. Dispositif suivant la revendication 4 ou 5 **caractérisé en ce que** lesdits moyens de mesure de la forme réelle de la face (1b) du panneau en regard desdits moyens (8) de maintien en position sont constitués, pour chacune desdites ventouses, d'un capteur (49) de mesure de la position de la ventouse (37) après blocage en position de préhension de la face (1b) du panneau , lesdits capteurs (49) étant reliés à des moyens de calcul de la forme de la face (1b) du panneau par interpolation des positions des différentes ventouses.

7. Dispositif suivant l'une des revendications 4 à 6, **caractérisé en ce que** lesdits moyens (8) de maintien en position sans hyperstatisme comprennent une platine-support (32) portant trois butées (33) de positionnement disposées en triangle et une pluralité de dispositifs à ventouse (34) distribués régulièrement dans l'espace entre lesdites butées (22), chaque dispositif (34) comprenant une ventouse (37) montée coulissante perpendiculairement à la platine (32), et des moyens (38 à 46) aptes à appliquer la ventouse (37) contre la face (1b) du panneau, la mettre sous vide, puis la bloquer dans sa position de saisie sans déformation locale dudit panneau.

8. Dispositif suivant la revendication 7, **caractérisé en ce que** les moyens (38 à 46) de positionnement-blocage de chaque ventouse (37) sont constitués d'un moteur (38), de moyens (40,41,42), désolidarisables, d'entraînement en translation d'un fourreau (35), de moyens (16,17), désolidarisables, de blocage du déplacement dudit fourreau (35), et d'un centreur (36) monté coulissant dans ledit fourreau (35) et relié à une ventouse (37) par l'intermédiaire d'un muscle (46) contractible.

9. Dispositif suivant la revendication 7 ou 8, **caractérisé en ce que** les dispositifs à ventouse (34) sont montés escamotables sur ladite platine support (32).

## Claims

1. A method of machining thin panels, in particular with a complex shape, especially non-developable, in which the panel to be machined (1) is previously put in an isostatic position,
- there are defined on the panel (1), in the part or parts to be machined, one or more machining regions of given extent, referred to as machining windows,
**characterised in that**:
- in line with each machining window:
• one of the faces (1b) of the panel (1) is held in position without introducing any positioning hyperstatism,
• the actual shape of said face (1b) is measured,
• the machining to be carried out is carried out on the opposite face (1a), taking said measured face (1b) as a reference, and
• said face (1b) is released.

2. A method according to claim 1, **characterised in that** the isostatic positioning of the panel (1) is carried out using two broaching holes (A, B) in the panel and three reference points (3, 4) situated in the machining window.

3. A method according to claim 1, **characterised in that** the isostatic positioning of the panel (1) is carried out using two broaching holes (A, B) in the panel and two reference points (3, 4) situated in the machining window, a third reference point being formed by one of said broaching holes (A, B).

4. A device for implementing the method according to one of claims 1 to 3, comprising means (7) for the isostatic positioning of the panel to be machined (1),
**characterised in that** it also comprises:
- means (8) for holding in position, without introducing any hyperstatism, one of the faces (1 b) of the panel, over a given extent,
- means (49) for measuring the actual shape of the part of said face opposite said holding means (8),
- means (7) for moving said holding means opposite said face (1 b) of the panel,
- multi-axis machining means (6) arranged opposite the other face (1 a) of the panel, and
- means for controlling in synchronism:
• the displacement and positioning of said holding means (8) successively opposite each of said machining windows (F1, F2, F3),
• the machining by said machining means (6) in line successively with each machining window (F1, F2, F3).

5. A device according to claim 4, **characterised in that** said means (8) for holding in position without hyperstatism is formed of a support (32) comprising:
- at least two positioning stops (33) helping, with said isostatic positioning means (7) to provide the isostatic positioning,
- a plurality of gripping suckers (37) able to move in a position normal to said face (1b) to be held,
- and means for putting in contact and locking in the gripping position each sucker (37) with said face (1b) after isostatic positioning of the panel (1).

6. A device according to claim 4 or 5, **characterised in that** said means for measuring the actual shape of the face (1b) of the panel opposite said means (8) for holding in position is formed, for each of said suckers, of a sensor (49) for measuring the position of the sucker (37) after locking the face (1b) of the panel in the gripping position, said sensors (49) being connected to means for calculating the shape of the face (1b) of the panel by interpolation of the positions of the various suckers.

7. A device according to one of claims 4 to 6, **characterised in that** said means (8) for holding in position without hyperstatism comprises a support plate (32) carrying three positioning stops (33) disposed in a triangle and a plurality of sucker devices (34) distributed regularly in the space between said stops (22), each device (34) comprising a sucker (37) mounted so as to slide perpendicularly to the plate (32), and means (38 to 46) able to apply the sucker (37) against the face (1b) of the panel, putting it under vacuum and then locking it in its gripped position without local deformation of said panel.

8. A device according to claim 7, **characterised in that** the means (38 to 46) for positioning and locking each sucker (37) is formed of a motor (38), disconnectable means (40, 41, 42) for driving a sheath (35) in translation, disconnectable means (16, 17) for locking the movement of said sheath (35), and a centring device (36) mounted so as to slide in said sheath (35) and connected to a sucker (37) by means of a contractible member (46).

9. A device according to claim 7 or 8, **characterised in that** the sucker devices (34) are mounted so as to be retractable on said support plate (32).

## Patentansprüche

1. Verfahren zum Bearbeiten von dünnen Platten, insbesondere solcher mit komplexer Form, die insbesondere nicht abwickelbar ist, bei dem die zu bearbeitende Platte (1) im Voraus in eine isostatische Form gebracht wird,
- auf der Platte (1) in dem oder in den zu bearbeitenden Teilen eine oder mehrere Bearbeitungszonen mit bestimmter Abmessung, die Bearbeitungsfenster genannt werden, definiert werden,
**dadurch gekennzeichnet, dass**
- am Ort jedes Bearbeitungsfensters:
- eine der Flächen (1b) der Platte (1) in ihrer Position gehalten wird, ohne eine Positionsüberbestimmung einzuführen,
- die wirkliche Form der Fläche (1b) gemessen wird,
- auf der gegenüberliegenden Fläche (1a) die auszuführende Bearbeitung vorgenommen wird, indem die gemessene Fläche (1b) als Referenz genommen wird, und
- die Fläche (1b) losgelassen wird.

2. Verfahren nach Anspruch 1, **dadurch gekennzeichnet, dass** das Bringen der Platte (1) in die isostatische Position ausgeführt wird, indem zwei Positionierlöcher (A, B) der Platte und drei Referenzpunkte (2, 3, 4), die sich in dem Bearbeitungsfenster befinden, verwendet werden.

3. Verfahren nach Anspruch 1, **dadurch gekennzeichnet, dass** das Bringen der Platte (1) in die isostatische Position ausgeführt wird, indem zwei Positionierlöcher (A, B) der Platte und zwei Referenzpunkte (3, 4), die sich in dem Bearbeitungsfenster befinden, verwendet werden, wobei ein dritter Referenzpunkt durch eines der Positionierlöcher (A, B) gebildet wird.

4. Vorrichtung zum Ausführen des Verfahrens nach einem der Ansprüche 1 bis 3, die Mittel (7) zum Bringen der zu bearbeitenden Platte (1) in eine isostatische Position umfasst, **dadurch gekennzeichnet, dass** sie außerdem umfasst:
- Mittel (8) zum Aufrechterhalten der Position einer der Flächen (1b) der Platte über eine bestimmte Abmessung, ohne eine Überbestimmtheit einzuführen,
- Mittel (49) zum Messen der wirklichen Form des Teils der Fläche gegenüber den Haltemitteln (8),
- Mittel (7) zum Verlagern der Haltemittel gegenüber der Fläche (1b) der Platte,
- mehrachsige Bearbeitungsmittel (6), die gegenüber der anderen Fläche (1a) der Platte angeordnet sind, und
- Mittel zum synchronen Steuern:
- der Verlagerung und der Anordnung der Haltemittel (8) nacheinander gegenüber jedem der Bearbeitungsfenster (F1, F2, F3),
- der Bearbeitung durch die Bearbeitungsmittel (6) nacheinander am Ort jedes Bearbeitungsfensters (F1, F2, F3).

5. Vorrichtung nach Anspruch 4, **dadurch gekennzeichnet, dass** die Mittel (8) zum Aufrechterhalten der Position ohne Überbestimmung aus einem Träger (32) gebildet sind, der umfasst:
- wenigstens zwei Positionierungsanschläge (33), die mit den Mitteln (7) zum Bringen in die isostatische Position zusammenwirken, um die isostatische Positionierung zu gewährleisten,
- mehrere bewegliche Greif-Saugnäpfe (37) in einer zu der zu haltenden Fläche (1b) normalen Position,
- und Mittel zum Herstellen eines Kontakts jedes Saugnapfs (37) mit der Fläche (1b) und zum Blockieren jedes Saugnapfs (37) in der Greifposition nach der isostatischen Positionierung der Platte (1).

6. Vorrichtung nach Anspruch 4 oder 5, **dadurch gekennzeichnet, dass** die Mittel zum Messen der wirklichen Form der Fläche (1b) der Platte gegenüber den Mitteln (8) zum Halten der Position für jeden der Saugnäpfe aus einem Sensor (49) zum Messen der Position des Saugnapfs (37) nach dem Blockieren der Fläche (1 b) der Platte in der Greifposition gebildet sind, wobei die Sensoren (49) mit Mitteln zum Berechnen der Form der Fläche (1b) der Platte durch Interpolation der Positionen der verschiedenen Saugnäpfe verbunden sind.

7. Vorrichtung nach einem der Ansprüche 4 bis 6, **dadurch gekennzeichnet, dass** die Mittel (8) zum Halten der Position ohne Überbestimmung eine Trägerplatine (32), die drei Positionierungsanschläge (33) trägt, die in einem Dreieck angeordnet sind, und mehrere Saugnapfvorrichtungen (34), die in dem Zwischenraum zwischen den Anschlägen (22) regelmäßig verteilt sind, umfasst, wobei jede Vorrichtung (34) einen Saugnapf (37), der senkrecht zu der Platine (32) gleitend montiert ist, und Mittel (38 bis 46), die den Saugnapf (37) gegen die Fläche (1b) der Platte drücken können, ihn mit Unterdruck beaufschlagen können und ihn dann in seiner vorstehenden Position blockieren können, ohne dass die Platte lokal verformt wird, umfasst.

8. Vorrichtung nach Anspruch 7, **dadurch gekennzeichnet, dass** die Mittel (38 bis 46) zum Positionieren/Blockieren jedes Saugnapfs (37) aus einem Motor (38), aus abtrennbaren Mitteln (40, 41, 42) zum translatorischen Antreiben einer Hülse (35), abtrennbaren Mitteln (16, 17) zum Blockieren der Verlagerung der Hülse (35) und einem Zentrierer (36), der in der Hülse (35) gleitend montiert ist und mit einem Saugnapf (37) über einen kontrahierbaren Muskel (46) verbunden ist, gebildet sind.

9. Vorrichtung nach Anspruch 7 oder 8, **dadurch gekennzeichnet, dass** die Saugnapfvorrichtungen (34) an der Trägerplatine (32) ausfahrbar angebracht sind.
